# EUROPEAN PATENT SPECIFICATION

(11) **EP 2 844 617 B1**
(45) Date of publication and mention of the grant of the patent: **14.08.2019**
(21) Application number: 13710626.6
(22) Date of filing: 05.03.2013
(51) Int. Cl.: C02F 11/04, C02F 3/30, C05F 7/00, C05F 3/00, C05F 17/00, C02F 1/20, B01D 19/00, C02F 103/20, C02F 103/26, C02F 101/10, C02F 101/16

(54) **BIOMASS CONVERSION METHOD AND SYSTEM**
VERFAHREN UND SYSTEMEZUR UMWANDLUNG VON BIOMASSE
PROCÉDÉ ET SYSTÈME DE CONVERSION DE BIOMASSE

(30) Priority: 06.03.2012 NL 1039442
(43) Date of publication of application: 11.03.2015
(73) Proprietor: Red Patent B.V., 7213 AN Gorssel (NL)
(72) Inventor: HAZEWINKEL, Jacob Hendrik Obbo, NL-3147 PA Maassluis (NL)
(74) Representative: Octrooibureau Van der Lely N.V.
(86) International application number: PCT/NL2013/050140
(87) International publication number: WO 2013/133703

(56) References cited:
- EP-A1- 0 241 999
- WO-A1-2010/131234
- DE-A1-102008 050 349
- US-A- 5 015 384
- US-A1- 2005 035 059
- US-A1- 2005 139 546
- US-A1- 2008 073 265
- US-A1- 2009 282 882
- US-B1- 6 409 788
- US-B1- 6 464 875
- US-B2- 7 842 186

## Description

### BACKGROUND DESCRIPTION

The invention relates to systems and processes for conversion of biomass into methane and other high-grade products such as renewable fertilizer, particularly making it feasible to process biomass on small (local) or medium (regional) case, preferably in on site setting, e.g. at the farm.

In the art there is a considerable interest to produce energy from biomass which would otherwise result in organic waste streams. The focus is mostly on agricultural and domestic plant residue and sewage sludge, presenting higher efficiency rates in terms of biogas production than for instance achieved with livestock biowaste. For the latter, the resulting biogas generally comprises significant levels of carbon dioxide and H₂S, and the latter associates the process with an undesired odor.

However, even the less efficient livestock industry biomass conversion appears attractive if finding ways to reduce the manure waste streams. Soil saturation with P, N and K is an important environmental issue. Regulations prevent farmers from using their untreated manure for fertilizing purposes, for it contains for instance too high ammonia concentrations than nowadays allowed for. Hitherto, existing biogas production technology has not been successful in converting its organic waste streams into high-end products, i.e. fertilizer, either. Consequently, the livestock industry has no option but to discharge the manure and buy artificial fertilizers instead, creating costs at both ends. It is another concern that the discarded animal organic waste streams also significantly contribute to the additional direct release of methane in the atmosphere. Therefore, in the art there is a desire to reduce manure waste discharge and/or to diminish the need for artificial fertilizers, and for economic and environmental reasons it is preferred that both are satisfied simultaneously.

The art fragmentally addresses parts of the treatment of organic waste in order to deal with the high concentrations of microorganisms, ammonia, heavy metals, phosphor and nitrogen in biogas waste streams or wastewater treatment. The art however fails to provide a suitable solution to form fertilizers from anaerobic digestion of animal waste at small scale.

US 6,464,875 discloses a method for converting animal byproduct materials into useful biogas and fertilizer, wherein the solids and the extracted ammonia and phosphorus destined as fertilizer are made available from the waste biosolids effluent through centrifugation, making use of a subsequent ammonia stripper for removing ammonia from the liquid effluent. No further details on struvite processing are provided. As collateral damage, ammonia is disadvantageously wasted along the way, and released into the environment.

Outside the field of renewable fertilizer production, in the field of waste water treatment, US 7,842,186 proposes a method of removing phosphorus and/or nitrogen from wastewater through struvite crystallization. The pH increase needed to achieve struvite crystallization is realized by stripping the treated wastewater from CO₂ at ambient conditions, thus avoiding the need for bulky and costly alkaline additions in the art. It mentions that ammonia is stripped alongside, all stripping preceding struvite formation. The solid waste thus obtained is disposed of.

DE102008050349A describes a struvite-forming process that takes place under aerobic conditions.

WO2012/103922A is a conflicting Euro-PCT application falling within the terms of Art. 54(3) EPC. It discloses an apparatus comprising a methane synthesis reactor, a vacuum device and a nitrification reactor but no fertilizer storage unit that collects fertilizer composition produced in the nitrification.

It is an object of the invention to provide a method for reducing ammonia and methane emission from biomass waste products. It is also an object of the invention to provide a method for producing biogas and renewable fertilizer from biomass waste products. It is also an object of the invention to provide small or medium scale and low-maintenance biogas and renewable fertilizer production from biomass waste products, preferably in a local or 'on site' setting, e.g. at the farm producing manure and/or agricultural waste. It is also an object of the invention to provide a method for reducing the H₂S release during biogas production from biomass waste products. In any case, the preferred biomass waste product is derived from livestock industry.

### SUMMARY OF THE INVENTION

The inventors found an improved way of making renewable fertilizer from a liquid organic biowaste effluent from an anaerobic biogas production method, and addressing the above objects. Struvite and calcium carbonate crystallization is achieved in the presence of ammonia by subjecting the effluent stream to a pressure below ambient pressure or (partial) vacuum, thus discharging gaseous carbon dioxide but maintaining the ammonia dissolved, and therewith increasing the pH of the aqueous effluent to levels suitable for initiating struvite crystallization. The struvite solids thus formed make a suitable soil fertilizer precursor. Through CO₂ elimination there is no need for alkaline additions. Vacuum is a straightforward and economic solution to the intricate free-falling degassing method of US 7,842,186, and it avoids discharging valuable ammonia into the environment.

The ammonia thus saved can be upgraded elsewhere in the process, to provide a second fertilizer composition. The inventors have found that nitrification of the ammonia present in the biosolids waste only after struvite formation makes it possible to provide a second soil fertilizer further on in the process. Optimal use is made of the ammonia, by not just avoiding undesired ammonia release to the environment, but in fact turning it into another high-end product. Thereto, after struvite solids separation, the ammonia left in the processed struvite-poor liquid effluent is aerobically and microbially converted into non-gaseous nitrates, which are collected and directly useable as a second, liquid renewable agricultural fertilizer composition comprising ammonium nitrate and urea, and which renewable agricultural fertilizer meets regulatory requirements. Furthermore, by producing separate fertilizer streams, both fertilizers may be made to specific requirements to be met when distributed on the soil, for example concentrations or amounts. This allows specific flexibility and efficiency in the product cycle.

In one aspect, the invention pertains to a process for converting biomass into biogas and renewable agricultural fertilizer, said process comprising anaerobic microbially digesting biomass **(a),** producing at least a gaseous methane-comprising (biogas) effluent **(b),** and an aqueous effluent **(c)** comprising phosphorous-containing compounds, magnesium ions, ammonia, carbon dioxide and methane gas, subjecting said aqueous effluent **(c)** in a struvite-forming step to a pressure below ambient pressure or (partial) vacuum, discharging a gaseous stream **(k)** comprising carbon dioxide and methane gas from said aqueous effluent and forming struvite-solids **(e),** separating and collecting said struvite solids **(e)** from said aqueous effluent, thereby obtaining an aqueous struvite-poor effluent **(f),** and producing at least a first renewable agricultural fertilizer composition **(g) by** subjecting said struvite-poor effluent **(f)** to aerobic microbial nitrification, thus converting at least part of the ammonia into ammonium nitrate. The fertilizer composition **(g)** comprising a mixture of ammonium nitrates and urea is preferably collected as a liquid processed nitrified effluent, ready-to-use or marketable as a renewable agricultural fertilizer. Fertilizer composition **(g)** is preferably collected and transferred to storage, either directly or following a further processing step.

After optional intermediate storage, the struvite solids **(e)** may be re-dissolved in aqueous solution at pH less than 8.0, more preferably less than 7.5. A liquid slow-release soil fertilizer composition comprising significant amounts of phosphorous and sulfur is thus produced. The process thus provides a second renewable agricultural fertilizer composition **(m).**

The process thus yields two agricultural renewable fertilizer compositions, or at least precursors thereof. Associated with their origin and contents, the struvite solids **(e)** are from hereon referred to as 'PS-fertilizer precursor', and the effluent **(m)** processed by nitrification is from hereon below referred to as 'KN-fertilizer'. Through dissolution of the PS-fertilizer precursor using sulfuric acid a marketable 'PS fertilizer' is obtained, particularly useful for slow-release fertilization. Both PS- and KN-fertilizer have an about neutral pH and are substantially void from gaseous organic matter, allowing these to be directly marketed or usable.

The inventors have also found ways to reduce H₂S release to the environment, advantageously reducing the undesired smell associated with biomass conversion, particularly from livestock byproducts, and increasing the methane content in the biogas thus produced. In fact, H₂S can be conveniently converted into sulfuric acid, that turns out useful in producing liquid soil fertilizer from the struvite solids elsewhere in the process. The inventors therewith contribute to the problem of providing a self-maintaining on-site biogas production, since a larger part of the biomass is actually used, and less external input is required.

In one aspect, the invention pertains to a process for converting biomass into biogas and renewable agricultural fertilizer, said process comprising anaerobic microbial digestion **3** of biomass, wherein H₂S-comprising gaseous effluent(s) from anaerobic digestion is(are) subjected to oxidation to form non-gaseous sulphuric acid, preferably using Fe(III). The oxidation step was found to reduce the H₂S contribution to the biogas (and the environment) to ppm levels.

In one aspect, the invention pertains to a combination of the inventors' findings as described above. Sulfuric acid derived from H₂S oxidation in biogas effluents from microbial digestion of livestock byproducts could thus be applied in dissolving the struvite solids formed from the liquid biosolids discharge from said microbial digestion, thus yielding a renewable soil fertilizer composition which is ready-to-use.

I In one aspect, the struvite-forming step involves using an upflow reactor. The struvite-forming step preferably involves a solid-liquid separation step in which struvite solids are separated and collected from the liquid subjected to a vacuum treatment. The struvite solids can be collected continuously or batch-wise, but preferably batch-wise or 'non-continuously'. It is preferred to establish separation using upflow conditions: The liquid comprising the struvite solids flows upwards; upflow velocity is controlled to make the struvite solids accumulate at the lower half of the upflow reactor, and the struvite-poor effluent is collected at the higher half of the upflow reactor. In this way, the heavy struvite particles are easily collectible and separable from the effluent with lighter partciles. Upflow reactor types as such are known in the art.

In one aspect, the low pressure in said struvite-forming step is selected to realize a pH increase to at least 8.0, preferably at least 8.4, more preferably in the range of 8.5 to 10. The liquid biomass waste effluent from anaerobic digestion is subjected to a pressure below ambient pressure or (partial) vacuum, thus creating a driving force for the carbon dioxide present at saturation levels in the effluent to 'escape', consequently raising the pH. It is preferred to control vacuum conditions in order to increase the pH to at least 8.0, preferably at least 8.4, more preferably in the range of 8.5 to 10. The required vacuum settings then simply follow from the nett carbon dioxyde extraction rate and concentration, and so on. It is preferred to monitor pH during this vacuum step, preferably continuously, as a too high or too low pH negatively influences efficiency. As a guide, it is preferred to control the pressure conditions in the reactor to less than 400 mbar absolute, more preferably in the range of 20 to 200 mbar absolute. At these (partial) vacuum conditions, struvite and calcium carbonates advantageously precipitate at a desired pH in most practical cases. It is preferred that pH is pressure-controlled.

In an aspect, the struvite solids collected are re-dissolved at a pH less than 8.0, more preferably less than 7.5, producing a second renewable agricultural fertilizer composition. Herein, said struvite solids collected may advantageously be contacted with sulphuric acid, preferably sulphuric acid **(j)** derived from H₂S oxidation, wherein said H₂S is preferably derived from anaerobic microbial digestion. This produces a more closed production cycle, minimizing external supplies of dangerous chemicals such as sulphuric acid. This also minimizes handling moments for operators, to thereby increase intrinsic safety.

In embodiments, said nitrification involves the use of a packed bed reactor. This ensures a relatively high active surface, which is useful for a relatively slow reaction like nitrification, while still retaining the active bacteria in the reactor.

In one aspect, the process excludes any denitrification treatment. This ensures to keep as much nitrogen compounds as possible in the process, i.e. as fertilizer, as denitrification would lead to nitrogen formation, which would escape from the cycle and would thus be lost for use as a fertilizer.

### LIST OF FIGURES

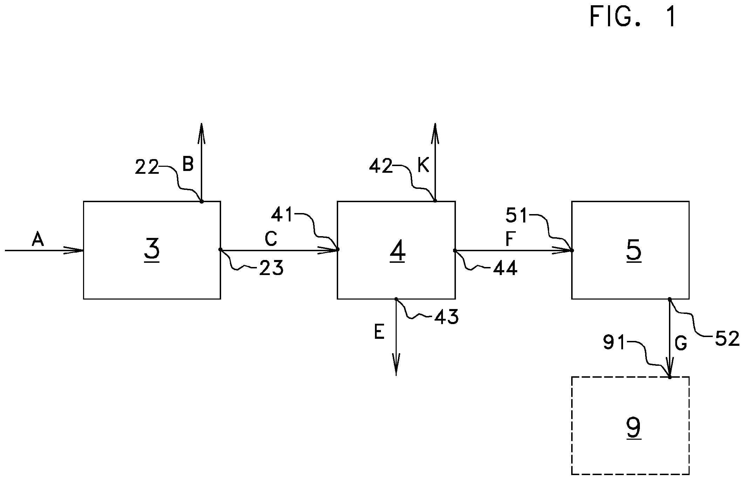

Figure 1 is a schematic representation of the biogas and agricultural renewable fertilizer production from biomass microbial digestion. The biomass processing method and system will be discussed in terms of the elements shown in the figure. The figure is however merely illustrative and does not limit the teaching of the invention. Modifications or changes therein without departing the scope of the invention are considered to fall within the ambit of the skilled person's knowledge.

In operation, biomass **(a)** is provided to a microbial anaerobic digestion unit **3** producing a biogas or gaseous methane-comprising effluent **(b)** and an aqueous methanogenesis waste effluent **(c),** i.e. an aqueous effluent comprising phosphorous-containing compounds, magnesium ions, ammonia, carbon dioxide and methane gas, which aqueous effluent **(c)** is then transferred to a struvite-forming reactor **4** having means for precipitating struvite solids **(e).** The struvite solids **(e)** are separated and the aqueous struvite-poor effluent **(f)** obtained is provided to an aerobic nitrification reactor **5** producing a renewable agricultural KN-fertilizer **(g).** A gaseous effluent **(k)** comprising at least carbon dioxide but preferably also including small amounts of methane gas is discharged from the struvite-forming reactor **4.**

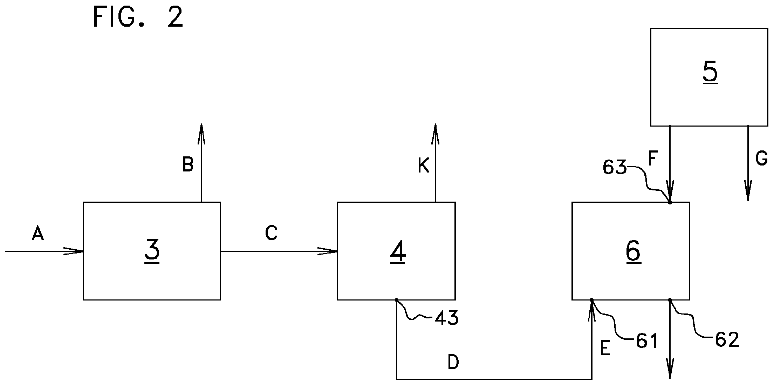

In Figure 2 the struvite solids **(e)** obtained in the struvite-forming step in the struvite-forming reactor **4** are transferred together with the aqueous effluent as a stream **(d)** to a struvite-separating unit **6,** only to collect the PS-fertilizer precursor or struvite solids **(e)** in the struvite-separating unit **6.** The aqueous struvite-poor effluent **(f)** produced is forwarded to the nitrification step.

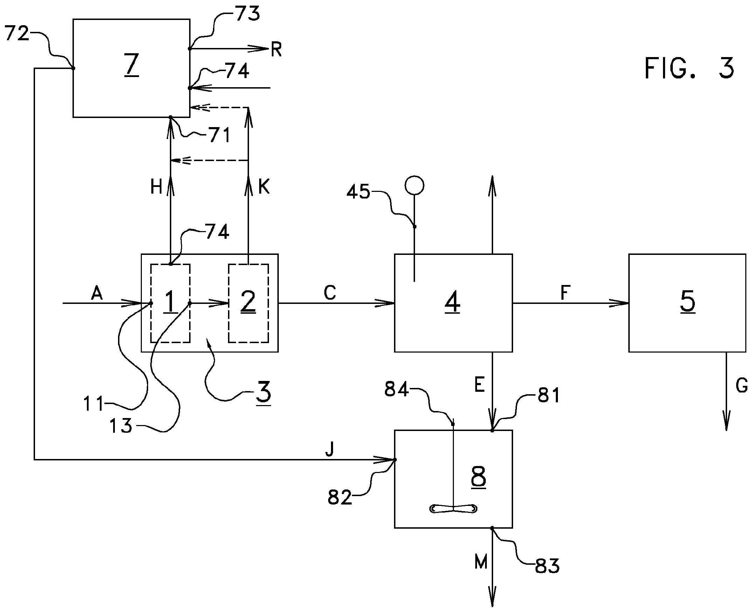

Figure 3 shows a preferred embodiment of the biomass conversion system according to figures 1 or 2, wherein the system is further amended to comprise means for reducing H₂S emissions; H₂S predominantly comprised in gaseous effluent **(h)** produced in one or more hydrolysis reactors **1,** and optionally H₂S present in the biogas **(b)** produced in a methanogenesis reactor **2,** is(are) oxidized in reactor **7** to sulfuric acid **(j)** which may advantageously be applied for dissolving struvite solids **(e)** in reactor **8** to yield a liquid renewable agricultural PS-fertilizer **(m).**

Not illustrated: The anaerobic digestion unit **3** may alternatively comprise a reactor in which hydrolysis and methanogenesis are performed simultaneously, and where the H₂S-comprising biogas stream **(b)** is tranferred to oxidation reactor **(7).** Not depicted either, but the advantageous sulfurous recycling step may likewise be implemented in the system setup of Figure 2.

### DETAILED DESCRIPTION

In one aspect, the present invention pertains to a system and method that can be used to convert biomass into useful biogas and renewable agricultural fertilizer products.

The term 'biomass' includes wastewater containing phosphorus and nitrogen such as sewage, sewage sludge, animal byproducts (urea and manure), particularly livestock organic waste, but also domestic and agricultural vegetable and plant waste. In the context of the invention, the terms 'livestock byproduct materials', 'livestock byproduct waste' and 'livestock organic waste' and '(liquid) manure' can be used interchangeably. Livestock refers to domesticated animals raised in an agricultural setting to produced commodities such as food, fiber and labor. It includes for instance cows, sheep, horses, pigs and poultry. Mixtures of biomass sources, such as agricultural vegetable waste and livestock organic waste, are also encompassed.

The method and system use anaerobic digestion to break down the organic waste, involving hydrolysis and methane-forming steps addressed in the art. In the anaerobic microbial digestion unit **3** both steps may be performed simultaneously in a single environment, or - as is nowadays preferred - in separate hydrolysis reactor(s) **1** and subsequent methane-forming reactor(s) **2.** An example is given in Figure 3. The pH and temperature of each reactor may thus be optimized for its intended purpose. In the context of the invention, the anaerobic digestion treatment involves biological decomposition or fermentation of organic and inorganic matter in which the microorganisms are indifferent to the presence or absence of oxygen; it involves a first, hydrolysis process in which large organic molecules are broken down and partially oxidized to form lower molecular weight organic acids, and a second, methane-forming or "methanogenic" process in which the lower molecular weight organic acids are converted into gaseous carbon compounds, primarily methane (and carbon dioxide). It is largely pH which determines where acidogenesis and acetogenesis, all considered being comprised in the first hydrolysis step, stop and subsequent methanogenesis starts. If carrying out the anaerobic digestion method in two separate steps, the hydrolysis is typically carried out at pH < 4.5, while methanogenesis typically involves pH > 4.5. The anaerobic digestion unit details, types of microorganisms and their optimum living conditions in terms of pH and temperature are all found in the literature. Anaerobic microbial digestion of biomass preferably comprises using one or more bacteria belonging to the genus *Methanobacterium,* the genus *Methanococcus,* the genus *Methanosarcina,* the genus *Methanosaeta,* and the genus *Methanohalophillus.* The optimum conditions for microbial biomass conversion are considered to fall within the ambit of the skilled person's knowledge, and as such not restrictive on the present inventors' contribution to the art, which rests in the use of the acidified liquid biomass waste effluent obtained from methanogenesis, said effluent comprising phosphorous, nitrogen (including large amounts of ammonia) and minerals such as calcium and magnesium, and carbon dioxide and (small amounts of) methane.

The liquid biomass waste effluent **(c)** from anaerobic digestion **3** is subjected to a pressure below ambient pressure or (partial) vacuum, thus creating a driving force for the carbon dioxide present at saturation levels in the effluent to 'escape', consequently raising the pH. It is preferred to control vacuum conditions in order to increase the pH to at least 8.0, preferably at least 8.4, more preferably in the range of 8.5 to 10. It is preferred to monitor pH during this vacuum step, preferably continuously. At these (partial) vacuum conditions, struvite and calcium carbonates advantageously precipitate. As a guide, it is preferred to control the pressure conditions in the reactor to less than 400 mbar absolute, more preferably in the range of 20 to 200 mbar absolute. It is preferred that pH is pressure-controlled.

The vacuum-driven struvite-forming treatment preferably involves a solid-liquid separation step in which the struvite solids **(e)** are separated and collected from the liquid subjected to vacuum treatment. The struvite solids **(e)** can be collected continuously or batch-wise, but preferably batch-wise or 'non-continuously'. It is preferred to establish separation using upflow conditions: The liquid comprising the struvite solids **(e)** flows upwards; upflow velocity is controlled to make the struvite solids accumulate at the lower half of the upflow reactor, and wherein the struvite-poor effluent **(f)** is collected at the higher half of the upflow reactor. Upflow reactor types as such are known in the art. The struvite-forming step or treatment preferably involves the use of an upflow reactor.

In a preferred embodiment, struvite solids **(e)** are separated and collected from an aqueous vacuum-treated effluent **(d)** in a subsequent struvite collector **6,** separate from the struvite-forming step **4.** It is preferred that the struvite solids **(e)** are separated and collected at atmospheric conditions. The PS-fertilizer precursor thus obtained may be processed to produce PS-fertilizer, optionally after intermediate storage.

The inventors found that small but significant portions of methane gas leaving the methanogenesis in dissolved form (in effluent **(c)**) rather than in the gaseous biogas stream **(b)** may still be recovered at the (partial) vacuum conditions in the struvite-forming treatment. The gaseous stream **(k)** comprising carbon dioxide and methane released at vacuum conditions may be processed to increase the methane-content and to remove at least part of the carbon dioxide, for example using standard techniques such as (potassium) carbonate wash or cryogenic distillation (not illustrated in the attached figures). In one embodiment, gaseous effluent obtained from the struvite-producing treatment may be rejoined with the biogas effluent(s) **(b)** produced during microbial anaerobic digestion of the biomass, thus removing carbon dioxide in a single washing step. In one embodiment, the gaseous methane-comprising effluent and/or methane gas produced in said struvite-forming step are further processed and subjected to at least gas drying (not depicted in the attached figures).

Struvite or magnesium ammonium phosphate comprises magnesium ions, ammonium nitrogen and phosphate usually in equal molar proportions; although many side reactions occur and cause the molar ratio exhibiting a maximum nitrogen elimination to vary as the likes of 3:1:1.5. Struvite analogs such as calcium ammonium phosphate, in which magnesium ion is substituted by calcium ion, are incorporated. In the context of the invention, the category 'struvite' includes struvite analogs along with struvite, and refers to the solid complexes defined above. Struvite solids form a suitable agricultural fertilizer precursor composition, comprising nitrogen and phosphorous. In the art, it would typically be marketed as slow-release fertilizer. More details are provided further above.

The struvite solids **(e)** collected are preferably re-dissolved with acid, preferably sulfuric acid, said sulfuric acid **(j)** preferably derived from H₂S oxidation. The H₂S oxidized may be derived from anaerobic microbial digestion. Conveniently, sulfuric acid **(j)** produced elsewhere in the biogas production process could be applied to redissolve the struvite solids **(e)** at the desired pH conditions, thus further minimizing biogas production waste streams. To that end, it is favored to subject H₂S from H₂S-comprising gaseous effluent(s) (**(b)** and/or **(h)**) from anaerobic digestion to oxidation to form non-gaseous sulphuric acid; Fe(III) may for instance be used as oxidizing agent. The H₂S contribution to the biogas (and to the environment) (**(n)** in figure 3) is reduced to ppm levels, preferably less than 10 ppm, more preferably less than 5 ppm, most preferably less than 2 ppm.

The acidified aqueous biomass waste effluent from which struvite has been precipitated, herein referred to as the struvite-poor liquid stream, is then subjected to a nitrification. Nitrification sequentially oxidizes ammonia to one or more forms of nitrate. Nitrification can be accomplished by various methods known to one of skill in the relevant art, and can be generally summarized to involve aerobic microbial conversion. A denitrification step is preferably excluded from the process, as such conversion of the nitrates into nitrogen would mean wasting precious fertilizer composition.

In one embodiment, nitrification is carried out in a packed bed reactor.

In one embodiment, nitrification involves microbial conversion using ammonia-oxidizing bacteria (AOB) and/or ammonia-oxidizing archaea (AOA). More preferably, nitrification involves one or more *Nitrosomonas, Nitrosococcus, Nitrobacter, Nitrococcus* bacteria, most preferably at least one of *Nitrosomonas* and/or *Nitrobacter* bacteria strains.

In one embodiment, temperature and/or pH are monitored during nitrification. The nitrification reactor **5** may be provided with an inlet for dosing acid, e.g. nitric acid, to lower the pH to levels facilitating the microbial conversion of NH₄⁺ into NO₃⁻. The pH of the processed liquid biomass subjected to nitrification is preferably lowered to a pH below 8, more preferably between 5 and 7.5. The operation temperature is adapted to the optimum living conditions for the nitrifying bacteria, preferably between 15 and 40 C. The biomass comprising nitrates and urea thus produced is collected, and is directly useable liquid fertilizer composition **(g).** The KN-fertilizer **(g)** may be transferred to storage, directly or following a further processing step.

As said above, in terms of high-end products, the process provides - in addition to biogas - a first and a second renewable agricultural fertilizer composition, abbreviated as 'fertilizer'. The PS-fertilizer **(m)** has a significantly higher phosphorous content than the KN-fertilizer **(g),** preferably at least 25 wt%, more preferably at least 50 wt% more phosphorous. The PS-fertilizer **(m)** has significantly lower potassium levels than KN-fertilizer **(g),** preferably at least 25 wt%, most preferably at least 50 wt% less potassium. In one embodiment, PS-fertilizer **(m)** may be characterized having an 'N-P-K'-label having N > 3, P > 15 and K < 1, preferably about 6:29:0:(Mg)10 (i.e. 6 wt% elemental nitrogen, 29 wt% elemental phosphorus and 0 wt% elemental potassium comprised in the fertilizer). The actual NPK are largely dependent on the biomass source. The NPK-rating of the fertilizer **(g)** comprising ammonium nitrates and urea preferably shows K > 0, more preferably K > 1, but P < 10, more preferably P < 5. The NPK characterization is well-known in the field and commonly used for distinguishing between agricultural fertilizers. For sake of completeness it is added here that the 'P' and 'K' reflect the available or soluble form of the element; in traditional chemical analysis, the NPK-test measures the equivalents P₂O₅ and K₂O, respectively.

Related therewith, the invention also pertains to a system or assembly for use in the above method, i.e. for converting biomass into biogas and renewable agricultural fertilizer, said system or assembly comprising:
i. an anaerobic digestion unit **3** for the anaerobic microbial conversion of biomass into biogas, said anaerobic digestion unit **3** comprising at least a digestion inlet for receiving biomass, a first digestion outlet **22** for discharging a methane-comprising gaseous effluent, and a second digestion outlet **23** for discharging an aqueous effluent comprising phosphorous, nitrogen and magnesium, and further comprising carbon dioxide and methane gas (dissolved in the aqueous effluent), and said anaerobic digestion unit **3** comprising anaerobic methane-forming microorganisms, preferably as described here above;
ii. a struvite-forming reactor **4** comprising at least a struvite formation inlet **41** for receiving said processed aqueous effluent from the anaerobic digestion unit **3,** said struvite formation inlet **41** being connected to the second digestion outlet **23,** and a first struvite formation outlet **42** for discharging a gaseous stream comprising carbon dioxide and methane gas, said struvite-forming reactor **4** provided with means for subjecting said processed aqueous effluent from the anaerobic digestion unit **3** to a pressure below ambient pressure or (partial) vacuum, and said struvite-forming reactor **4** providing struvite solids; and
iii. a nitrification reactor **5** for aerobic microbial conversion of ammonia into ammonium nitrate comprising at least a nitrification inlet **51** for receiving an aqueous struvite-poor effluent **(f)** derived from the struvite-forming reactor **4** and a nitrification outlet **52** for discharging nitrified processed renewable agricultural fertilizer composition **(g),** and said nitrifcation reactor **5** comprising one or more aerobic nitrifying microorganisms, preferably as detailed here above.

The above system is particularly suited for performing the method of converting biomass into biogas and renewable agricultural fertilizer according to the invention.

The system comprises a fertilizer storage unit **9** for fertilizer composition **(g),** wherein said fertilizer storage unit **9** comprises at least a storage inlet **91** for receiving fertilizer composition **(g)** discharged from nitrification outlet **52,** and wherein said storage inlet **91** is connected to the nitrification outlet **52.**

The terminology 'system' and 'assembly' are used interchangeably. The terminolgy "being connected" means that the inlet and outlet are in fluid communication with one another, not excluding any valves, communication ports, monitoring units, cooling or heating devices etc. which may still be present inbetween the in- and outlets.

The anaerobic digestion unit **3** comprises anaerobic methane-forming microorganisms to convert the biomass to biogas. In a preferred embodiment, the anaerobic digestion unit **3** comprises at least a methanogenesis reactor **2,** which methanogenesis reactor **2** is preferably a solid bed reactor. The methanogenesis reactor **2** preferably comprising at least a digestion inlet **21** for receiving biomass, a first digestion outlet **22** for discharging a methane-comprising gaseous effluent, and a second digestion outlet **23** for discharging an aqueous effluent comprising phosphorous, nitrogen and magnesium, and further comprising carbon dioxide and methane gas. The anaerobic digestion unit may further comprise one or more hydrolysis reactor(s) **1** preceding the methanogenesis reactor **2.** In this embodiment, the biomass received through digestion inlet **21** is hydrolyzed biomass discharged from a first hydrolysis outlet **13;** biomass is pre-treated in order to optimize the methanogenesis.

In a preferred embodiment wherein the anaerobic digestion unit **3** comprises at least one hydrolysis unit **1** and at least one methanogenesis reactor **2,** the latter preferably as described above. It is preferred that the hydrolysis unit **1** comprises a second hydrolysis outlet **12** for discharging H₂S-comprising gaseous stream **(h).**

The struvite-forming reactor **4** is preferably provided with a device or means for controlling and monitoring the pressure. The struvite-forming reactor **4** may be further provided with a device or means for monitoring pH.

In one embodiment, the struvite-forming reactor **4** comprises a third struvite formation outlet **44** for discharging an aqueous struvite-poor effluent **(f),** said third struvite formation outlet **44** being connected to the nitrifcation inlet **51.** In this embodiment, the struvite solids **(e)** are separated in the struvite-forming reactor **4,** for instance making use of an upflow struvite-forming reactor.

In a preferred embodiment, the system or assembly further comprises a struvite collector **6** for separating and collecting struvite solids **(e),** said struvite collector **6** having at least a struvite collector inlet **61** for retrieving struvite solids comprised in a low-pressure treated aqueous effluent **(d),** said struvite collector inlet **61** being connected to struvite formation outlet **43,** a first struvite collector outlet **62** for discharging struvite solids **(e)** and a second struvite collector outlet **63** for discharging an aqueous struvite-poor effluent **(f),** said struvite collector outlet **63** being connected to nitrification inlet **51.** It is preferred that the struvite solids are separated and collected at atmospheric conditions, separate of the struvite formation step. Separation of the struvite solids is preferably established using an upflow struvite collector **6.**

As an example, a preferred upflow struvite collector **6** comprises a collector inlet **61** for receiving the struvite solids-comprising effluent **(d),** which inlet is located at the lower part of the collector, a first collector outlet **62** for discharging struvite solids **(e)** at the lower part of the collector, and a second collector outlet **63** located at the upper part of the collector for discharging the struvite-poor effluent. In operation, the upward flow velocity of effluent **(d)** is controlled to let the struvite residue sink, while the liquid struvite-poor effluent **(f)** continues to the second collector outlet **63** at the top of the collector. Within the setup, collector inlet **61** and first collector outlet **62** are situated well below second collector outlet **63.**

The system may be provided with means for collecting the struvite solids **(e)** batchwise or continuously, preferably batch-wise. The struvite solids **(e)** derived from the struvite-forming reactor **4,** either directly or via a struvite collector **6,** may be transferred to intermediate storage prior to use.

In one embodiment, the system comprises a H₂S oxidation reactor **7** having at least a first oxidation inlet **71** for receiving H₂S-comprising gaseous effluent(s) from the anaerobic digestion unit **3,** said first oxidation inlet **71** preferably connected to the second hydrolysis outlet **12,** a first oxidation outlet **72** for discharging sulfuric acid, and a second oxidation outlet **73** for discharging H₂S-poor gas **(n).** In one embodiment, this 'odor-free' gaseous stream **(n)** may be released into the environment. The oxidation reactor may comprise a second oxidation inlet **74** for receiving an oxidizing agent, said oxidizing agent preferably comprising Fe(III).

In a preferred embodiment, the above system may further comprise a mixing unit **8** having at least a first mixing inlet **81** for receiving said struvite solids derived from the struvite-forming reactor, mixing means **84** for dissolving struvite solids in water, a second mixing inlet **82** for adding acid, preferably sulfuric acid, and a mixing outlet **83** for discharging a renewable agricultural fertilizer composition **(m).** The mixing unit **8** may be provided with devices or means for pH monitoring. The liquid composition thus obtained may be transferred to a storage unit. The first mixing inlet **81** is preferably conection to outlet **62** of the struvite collector **6.**

The second mixing inlet **82** is preferably connected to the first oxidation outlet **72,** for receiving sulfuric acid derived from H₂S production in the anaerobic digestion unit **3.**

In one embodiment, the nitrification reactor **5** is a packed bed reactor.

The system is preferably void from any denitrification means.

According to a preferred embodiment, the communicating inlets and outlets of the reactors comprise devices or means for isolating microorganisms and for reintroducing the isolated microorganisms in the reactor from which they were derived from. This particularly accounts for the outlets of the anaerobic digestion unit **3,** particularly the methanogenesis reactor **2** comprised therein, and nitrification reactor **5.** A stable and appropriate culture of micro-organisms in the reactor is thus provided.

According to a preferred embodiment, the system comprises a controlling device to monitor pH and/or temperature in one or more of the reactors. The system may be provided with heating or cooling regulating devices for maintaining the temperature in the defined ranges, with pH regulating devices for maintaining the pH at a desired level. Temperature regulating devices can be heaters providing heat generated or derived from the apparatus itself, or heat from an external source, coolers providing cooling generated or derived from the apparatus itself, or cooling from an external source. pH regulating devices can be holders comprising sugar, buffer, acid or basic liquid fitted with supply means for introducing the sugar, buffer, acid or basic liquid in the appropriate reactors or units and/or a transport system controlling the flow of basic or acidic fluids in the system.

The descriptions above are intended to be illustrative, not limiting. Thus, it will be apparent to one skilled in the art that modifications may be made to the invention as described without departing from the scope of the claims set out below.

## Claims

1. A process for converting biomass into biogas and renewable agricultural fertilizer, said process comprising:
- anaerobic microbially digesting of biomass **(a),** producing at least a gaseous methane-comprising effluent **(b)** and an aqueous effluent **(c)** comprising phosphorous-containing compounds, magnesium ions, ammonia, carbon dioxide and methane gas;
- subjecting said aqueous effluent **(c)** in a struvite-forming step to a pressure below ambient pressure or (partial) vacuum, discharging a gaseous stream **(k)** comprising carbon dioxide and methane gas from said aqueous effluent, thereby forming struvite-solids **(e);**
- separating and collecting said struvite solids **(e)** from said aqueous effluent, thereby obtaining an aqueous struvite-poor effluent **(f);**
- producing at least a first renewable agricultural fertilizer composition **(g)** by subjecting said aqueous struvite-poor effluent **(f)** to aerobic microbial nitrification, thereby converting at least part of the ammonia into ammonium nitrate,
wherein said first fertilizer composition **(g)** is collected and transferred to storage, either directly or following a further processing step.

2. The process according to claim 1, wherein said struvite-forming step involves using an upflow reactor.

3. The process according to any one of the preceding claims, wherein said low pressure in said struvite-forming step is selected to realize a pH increase to at least 8.0, preferably at least 8.4, more preferably in the range of 8.5 to 10.

4. The process according to any one of the preceding claims, wherein said low pressure in said struvite-forming step is less than 400 mbar absolute, more preferably in the range of 20 to 200 mbar absolute.

5. The process according to any one of the preceding claims, wherein pH is monitored in said struvite-forming step, preferably continuously.

6. The process according to any one of the preceding claims, wherein said struvite solids **(e)** collected are re-dissolved at pH less than 8.0, more preferably less than 7.5, producing a second renewable agricultural fertilizer composition **(m).**

7. The process according to claim 6, wherein said struvite solids **(e)** collected are contacted with sulphuric acid, preferably sulphuric acid **(j)** derived from H₂S oxidation, wherein said H₂S is preferably derived from anaerobic microbial digestion.

8. The process according to any one of the preceding claims, wherein said nitrification involves use of a packed bed reactor.

9. The process according to any one of the preceding claims, excluding any denitrification treatment.

10. The process according to any one of the preceding claims, wherein said struvite solids are collected non-continuously.

11. The process according to any one of the preceding claims, wherein the struvite solids are separated and collected at amospheric conditions.

12. A system for converting biomass into biogas and renewable agricultural fertilizer, comprising:
i. an anaerobic digestion unit **(3)** for the anaerobic microbial conversion of biomass into biogas, said anaerobic digestion unit **(3)** comprising at least a digestion inlet for receiving biomass, a first digestion outlet (**22)** for discharging a methane-comprising gaseous effluent, and a second digestion outlet (**23)** for discharging an aqueous effluent comprising phosphorous, nitrogen and magnesium, and further comprising carbon dioxide and methane gas, and said anaerobic digestion unit **(3)** comprising anaerobic methane-forming microorganisms;
ii. a struvite-forming reactor **(4)** comprising at least a struvite formation inlet (**41)** for receiving said processed aqueous effluent from the anaerobic digestion unit **(3),** said struvite formation inlet (**41)** being connected to the second digestion outlet (**23),** and a first struvite formation outlet (**42)** for discharging a gaseous stream comprising carbon dioxide and methane gas, said struvite-forming reactor **(4)** provided with means for subjecting said processed aqueous effluent from said anaerobic digestion unit **(3)** to a pressure below ambient pressure or (partial) vacuum, and said struvite-forming reactor **(4)** providing struvite solids;
iii. a nitrification reactor **(5)** for aerobic microbial conversion of ammonia into ammonium nitrate comprising at least a nitrification inlet (**51)** for receiving an aqueous struvite-poor effluent derived from the struvite-forming reactor **(4)** and a nitrification outlet (**52)** for discharging nitrified processed renewable agricultural fertilizer composition **(g),** and said nitrification reactor comprising one or more aerobic nitrifying microorganisms; and
iv. a fertilizer storage unit **(9)** for fertilizer composition **(g)** derived from nitrification, wherein said storage unit **(9)** comprises at least a storage inlet (**91)** for receiving fertilizer composition discharged from nitrification outlet (**52),** and wherein said storage inlet (**91)** is connected to the nitrification outlet (**52).**

13. The system according to claim 12, wherein said struvite-forming reactor **(4)** is provided with a device or means for monitoring pH (**45).**

14. The system according to claim 12 or 13, further comprising a struvite collector **(6)** for separating and collecting struvite solids, said struvite collector **(6)** having at least a struvite collector inlet (**61)** for retrieving struvite solids comprised in a low-pressure treated aqueous effluent from said struvite-forming reactor **(4),** said struvite collector inlet (**61)** being connected to a second struvite formation outlet (**43),** said struvite collector comprising a first struvite collector outlet (**62)** for discharging struvite solids **(e)** and a second struvite collector outlet (**63)** for discharging an aqueous struvite-poor effluent **(f),** said struvite collector outlet (**63)** being connected to nitrification inlet (**51).**

15. The system according to claim 14, wherein said struvite collector **(6)** operates at atmospheric conditions.

16. The system according to any one of claims 12 - 15, wherein said struvite-forming reactor **(4)** and/or said struvite collector **(6)** is an upflow reactor.

17. The system according to any one of claims 12 - 16, further comprising a H₂S oxidation reactor **(7)** having at least an oxidation inlet (**71)** for receiving H₂S-comprising gaseous effluent(s) from the anaerobic digestion unit **(3),** a first oxidation outlet (**72)** for discharging H₂S-poor gas, and a second oxidation outlet (**73)** for discharging sulfuric acid.

18. The system according to any one of claims 12 - 17, further comprising a mixing unit **(8)** having at least a first mixing inlet (**81)** for receiving said struvite solids derived from the struvite-forming reactor (**4),** mixing means (**84)** for dissolving struvite solids in water, a second mixing inlet (**82)** for receiving sulfuric acid, and a mixing outlet (**83)** for discharging a renewable agricultural fertilizer composition **(m),** and wherein the second mixing inlet (**82)** is preferably connected to the first oxidation outlet (**72),** for receiving sulfuric acid derived from H₂S production in the anaerobic digestion unit **(3).**

## Patentansprüche

1. Verfahren zur Umwandlung von Biomasse in Biogas und regenerativen landwirtschaftlichen Dünger, wobei das Verfahren Folgendes umfasst:
- anaerobes mikrobielles Aufschließen von Biomasse **(a),** Herstellen mindestens eines Methan umfassenden gasförmigen Ausstroms **(b)** und eines wässrigen Ausstroms **(c),** der phosphorhaltige Verbindungen, Magnesiumionen, Ammoniak, Kohlendioxid und Methangas umfasst;
- Unterwerfen des wässrigen Ausstroms **(c)** in einem Struvitbildungsschritt einem Druck unterhalb des Umgebungsdrucks oder einem (partiellen) Vakuum, Entnehmen eines Kohlendioxid und Methangas umfassenden gasförmigen Stroms **(k)** aus dem wässrigen Ausstrom, wodurch Struvit-Feststoffe **(e)** gebildet werden;
- Abtrennen und Auffangen der Struvit-Feststoffe **(e)** aus dem wässrigen Ausstrom, wodurch ein wässriger Struvit-armer Ausstrom **(f)** erhalten wird;
- Herstellen mindestens einer ersten regenerativen landwirtschaftlichen Düngerzusammensetzung **(g)** durch Unterwerfen des wässrigen Struvit-armen Ausstroms **(f)** einer aeroben mikrobiellen Nitrifikation, wodurch mindestens ein Teil des Ammoniaks in Ammoniumnitrat umgewandelt wird,
wobei die erste Düngerzusammensetzung **(g)** entweder direkt oder nach einem weiteren Verarbeitungsschritt aufgefangen und eingelagert wird.

2. Verfahren nach Anspruch 1, wobei der Struvitbildungsschritt die Verwendung eines Aufstromreaktors beinhaltet.

3. Verfahren nach einem der vorhergehenden Ansprüche, wobei der niedrige Druck in dem Struvitbildungsschritt so gewählt wird, dass eine pH-Erhöhung auf mindestens 8,0, vorzugsweise mindestens 8,4, stärker bevorzugt im Bereich von 8,5 bis 10, erreicht wird.

4. Verfahren nach einem der vorhergehenden Ansprüche, wobei der niedrige Druck in dem Struvitbildungsschritt weniger als 400 mbar absolut, stärker bevorzugt im Bereich von 20 bis 200 mbar absolut, beträgt.

5. Verfahren nach einem der vorhergehenden Ansprüche, wobei der pH-Wert in dem Struvitbildungsschritt überwacht, vorzugsweise kontinuierlich überwacht, wird.

6. Verfahren nach einem der vorhergehenden Ansprüche, wobei die aufgefangenen Struvit-Feststoffe **(e)** bei einem pH-Wert unter 8,0, stärker bevorzugt unter 7,5, wieder gelöst werden, wobei eine zweite regenerative landwirtschaftliche Düngerzusammensetzung **(m)** hergestellt wird.

7. Verfahren nach Anspruch 6, wobei die aufgefangenen Struvit-Feststoffe **(e)** mit Schwefelsäure, vorzugsweise aus der H₂S-Oxidation stammender Schwefelsäure **(j),** in Kontakt gebracht werden, wobei das H₂S vorzugsweise aus einem anaeroben mikrobiellen Aufschluss stammt.

8. Verfahren nach einem der vorhergehenden Ansprüche, wobei die Nitrifikation die Verwendung eines Festbettreaktors beinhaltet.

9. Verfahren nach einem der vorhergehenden Ansprüche, das jegliche Denitrifikationsbehandlung ausschließt.

10. Verfahren nach einem der vorhergehenden Ansprüche, wobei die Struvit-Feststoffe nicht-kontinuierlich aufgefangen werden.

11. Verfahren nach einem der vorhergehenden Ansprüche, wobei die Struvit-Feststoffe unter Atmosphärenbedingungen abgetrennt und aufgefangen werden.

12. System zur Umwandlung von Biomasse in Biogas und regenerativen landwirtschaftlichen Dünger, umfassend:
i. eine anaerobe Aufschlusseinheit **(3)** für die anaerobe mikrobielle Umwandlung von Biomasse in Biogas, wobei die anaerobe Aufschlusseinheit **(3)** mindestens einen Aufschlusseinlass zum Aufnehmen von Biomasse, einen ersten Aufschlussauslass **(22)** zur Ausleitung eines Methan umfassenden gasförmigen Ausstroms und einen zweiten Aufschlussauslass **(23)** zum Ausleiten eines Phosphor, Stickstoff und Magnesium umfassenden und zudem Kohlendioxid und Methangas umfassenden wässrigen Ausstroms umfasst und wobei die anaerobe Aufschlusseinheit **(3)** anaerobe Methan bildende Mikroorganismen umfasst;
ii. einen Struvitbildungsreaktor **(4),** umfassend mindestens einen Struvitbildungseinlass **(41)** zum Aufnehmen des verarbeiteten wässrigen Ausstroms aus der anaeroben Aufschlusseinheit **(3),** wobei der Struvitbildungseinlass **(41)** mit dem zweiten Aufschlussauslass **(23)** verbunden ist, und einen ersten Struvitbildungsauslass **(42)** zum Ausleiten eines Kohlendioxid und Methangas umfassenden Gasstroms, wobei der Struvitbildungsreaktor **(4)** mit Mitteln zum Unterwerfen des verarbeiteten wässrigen Ausstroms aus der anaeroben Aufschlusseinheit **(3)** einem Druck unterhalb des Umgebungsdrucks oder einem (partiellen) Vakuum ausgestattet ist und wobei der Struvitbildungsreaktor **(4)** Struvit-Feststoffe bereitstellt;
iii. einen Nitrifikationsreaktor **(5)** zur aeroben mikrobiellen Umwandlung von Ammoniak in Ammoniumnitrat, umfassend mindestens einen Nitrifikationseinlass **(51)** zum Aufnehmen eines aus dem Struvitbildungsreaktor **(4)** stammenden wässrigen struvitarmen Ausstroms und einen Nitrifikationsauslass **(52)** zum Ausleiten einer nitrifizierten verarbeiteten regenerativen landwirtschaftlichen Düngerzusammensetzung **(g),** wobei der Nitrifikationsreaktor einen oder mehrere aerobe nitrifizierende Mikroorganismen umfasst; und
iv. eine Düngerlagerungseinheit **(9)** für aus der Nitrifikation stammende Düngerzusammensetzung **(g),** wobei die Lagerungseinheit **(9)** mindestens einen Lagerungseinlass **(91)** zum Aufnehmen von aus dem Nitrifikationsauslass **(52)** ausgeleiteter Düngerzusammensetzung umfasst und wobei der Lagerungseinlass **(91)** mit dem Nitrifikationsauslass **(52)** verbunden ist.

13. System nach Anspruch 12, wobei der Struvitbildungsreaktor **(4)** mit einer Vorrichtung oder Mitteln zum Überwachen des pH-Werts **(45)** ausgestattet ist.

14. System nach Anspruch 12 oder 13, das ferner einen Struvitsammler **(6)** zum Abtrennen und Auffangen von Struvit-Feststoffen umfasst, wobei der Struvitsammler **(6)** mindestens einen Struvitsammlereinlass **(61)** zum Rückgewinnen von Struvit-Feststoffen aufweist, die in einem Niederdruck-behandelten wässrigen Ausstrom aus dem Struvitbildungsreaktor **(4)** umfasst sind, wobei der Struvitsammlereinlass **(61)** mit einem zweiten Struvitbildungsauslass **(43)** verbunden ist, wobei der Struvitsammler einen ersten Struvitsammlerauslass **(62)** zum Ausleiten von Struvit-Feststoffen **(e)** und einen zweiten Struvitsammlerauslass **(63)** zum Ausleiten eines wässrigen struvitarmen Ausstroms **(f)** umfasst, wobei der Struvitsammlerauslass **(63)** mit dem Nitrifikationseinlass **(51)** verbunden ist.

15. System nach Anspruch 14, wobei der Struvitsammler **(6)** unter Atmosphärenbedingungen arbeitet.

16. System nach einem der Ansprüche 12-15, wobei der Struvitbildungsreaktor **(4)** und/oder der Struvitsammler **(6)** ein Aufstromreaktor ist.

17. System nach einem der Ansprüche 12-16, das ferner einen H₂S-Oxidationsreaktor **(7)** umfasst, der mindestens einen Oxidationseinlass **(71)** zum Aufnehmen eines H₂S umfassenden gasförmigen Ausstroms bzw. von H₂S umfassenden gasförmigen Ausströmen aus der anaeroben Aufschlusseinheit **(3),** einen ersten Oxidationsauslass **(72)** zum Ausleiten von H₂S-armem Gas und einen zweiten Oxidationsauslass **(73)** zum Ausleiten von Schwefelsäure aufweist.

18. System nach einem der Ansprüche 12-17, das ferner eine Mischeinheit **(8)** umfasst, die mindestens einen ersten Mischeinlass **(81)** zum Aufnehmen der aus dem Struvitbildungsreaktor **(4)** stammenden Struvit-Feststoffe, Mischmittel **(84)** zum Lösen von Struvit-Feststoffen in Wasser, einen zweiten Mischeinlass **(82)** zum Aufnehmen von Schwefelsäure und einen Mischauslass **(83)** zum Ausleiten einer regenerativen landwirtschaftlichen Düngerzusammensetzung **(m)** aufweist, und wobei der zweite Mischeinlass **(82)** vorzugsweise mit dem ersten Oxidationsauslass **(72)** verbunden ist, um Schwefelsäure aufzunehmen, die aus der H₂S-Produktion in der anaeroben Aufschlusseinheit **(3)** stammt.

## Revendications

1. Procédé de conversion de biomasse en biogaz et en fertilisant agricole renouvelable, ledit procédé comprenant :
- la digestion par voie microbienne anaérobie de biomasse (a), produisant au moins un effluent comprenant du méthane gazeux (b) et un effluent aqueux (c) comprenant des composés phosphorés, des ions magnésium, de l'ammoniaque, du dioxyde de carbone et du méthane gazeux ;
- la soumission dudit effluent aqueux (c) dans une étape de formation de struvite à une pression inférieure à la pression ambiante ou un vide (partiel), déchargeant un courant gazeux (k) comprenant du dioxyde de carbone et du méthane gazeux à partir dudit effluent aqueux, formant ainsi des matières solides de struvite (e) ;
- la séparation et la collecte desdites matières solides de struvite (e) à partir dudit effluent aqueux, pour obtenir ainsi un effluent aqueux pauvre en struvite (f) ;
- la production d'au moins une première composition de fertilisant agricole renouvelable (g) en soumettant ledit effluent aqueux pauvre en struvite (f) à une nitrification microbienne aérobie, convertissant ainsi au moins une partie de l'ammoniaque en nitrate d'ammonium ;
où ladite première composition de fertilisant (g) est collectée et transférée vers un stockage, soit directement, soit suite à une autre étape de traitement.

2. Procédé selon la revendication 1, dans lequel ladite étape de formation de struvite met en jeu l'utilisation d'un réacteur à courant ascendant.

3. Procédé selon l'une quelconque des revendications précédentes, dans lequel ladite basse pression dans ladite étape de formation de struvite est choisie afin d'obtenir une augmentation du pH d'au moins 8,0, préférablement d'au moins 8,4, plus préférablement dans la plage allant de 8,5 à 10.

4. Procédé selon l'une quelconque des revendications précédentes, dans lequel ladite basse pression dans ladite étape de formation de struvite est inférieure à 400 mbars absolus, plus préférablement dans la plage allant de 20 à 200 mbars absolus.

5. Procédé selon l'une quelconque des revendications précédentes, dans lequel le pH est suivi dans ladite étape de formation de struvite, préférablement de manière continue.

6. Procédé selon l'une quelconque des revendications précédentes, dans lequel lesdites matières solides de struvite (e) collectées sont redissoutes à un pH inférieur à 8,0, plus préférablement inférieur à 7,5, produisant une deuxième composition de fertilisant agricole renouvelable (m).

7. Procédé selon la revendication 6, dans lequel lesdites matières solides de struvite (e) collectées sont mises en contact avec de l'acide sulfurique, préférablement de l'acide sulfurique (j) dérivé de l'oxydation de H₂S, où ledit H₂S est dérivé de préférence d'une digestion microbienne anaérobie.

8. Procédé selon l'une quelconque des revendications précédentes, dans lequel ladite nitrification met en jeu l'utilisation d'un réacteur à lit tassé.

9. Procédé selon l'une quelconque des revendications précédentes, excluant un traitement de dénitrification quelconque.

10. Procédé selon l'une quelconque des revendications précédentes, dans lequel lesdites matières solides de struvite sont collectées de manière non continue.

11. Procédé selon l'une quelconque des revendications précédentes, dans lequel les matières solides de struvite sont séparées et collectées dans des conditions atmosphériques.

12. Système destiné à la conversion de biomasse en biogaz et en fertilisant agricole renouvelable, comprenant :
i. une unité de digestion anaérobie (3) destinée à la conversion microbienne anaérobie de biomasse en biogaz, ladite unité de digestion anaérobie (3) comprenant au moins une entrée de digestion pour recevoir la biomasse, une première sortie de digestion (22) pour décharger un effluent gazeux comprenant du méthane, et une deuxième sortie de digestion (23) pour décharger un effluent aqueux comprenant du phosphore, de l'azote et du magnésium, et comprenant en outre du dioxyde de carbone et du méthane gazeux, et ladite unité de digestion anaérobie (3) comprenant des microorganismes anaérobies formant du méthane ;
ii. un réacteur de formation de struvite (4) comprenant au moins une entrée de formation de struvite (41) pour recevoir ledit effluent aqueux traité issu de l'unité de digestion anaérobie (3), ladite entrée de formation de struvite (41) étant reliée à la deuxième sortie de digestion (23), et une première sortie de formation de struvite (42) pour décharger un courant gazeux comprenant du dioxyde de carbone et du méthane gazeux, ledit réacteur de formation de struvite (4) étant pourvu de moyens pour soumettre ledit effluent aqueux traité issu de ladite unité de digestion anaérobie (3) à une pression inférieure à la pression ambiante ou un vide (partiel), et ledit réacteur de formation de struvite (4) fournissant des matières solides de struvite ;
iii. un réacteur de nitrification (5) pour la conversion microbienne aérobie de l'ammoniaque en nitrate d'ammonium, comprenant au moins une entrée de nitrification (51) pour recevoir un effluent aqueux pauvre en struvite dérivé du réacteur de formation de struvite (4) et une sortie de nitrification (52) pour décharger la composition de fertilisant agricole renouvelable traitée et nitrifiée (g), et ledit réacteur de nitrification comprenant un ou plusieurs microorganismes aérobies de nitrification ; et
iv. une unité de stockage de fertilisant (9) pour la composition de fertilisant (g) dérivée de la nitrification, où ladite unité de stockage (9) comprend au moins une entrée de stockage (91) pour recevoir la composition de fertilisant déchargée de la sortie de nitrification (52), et où ladite entrée de stockage (91) est reliée à la sortie de nitrification (52).

13. Système selon la revendication 12, dans lequel ledit réacteur de formation de struvite (4) est pourvu d'un dispositif ou d'un moyen pour suivre le pH (45).

14. Système selon la revendication 12 ou 13, comprenant en outre un collecteur de struvite (6) pour séparer et collecter les matières solides de struvite, ledit collecteur de struvite (6) ayant au moins une entrée de collecteur de struvite (61) pour récupérer les matières solides de struvite comprises dans un effluent aqueux traité à basse pression issu dudit réacteur de formation de struvite (4), ladite entrée de collecteur de struvite (61) étant reliée à une deuxième sortie de formation de struvite (43), ledit collecteur de struvite comprenant une première sortie de collecteur de struvite (62) pour décharger les matières solides de struvite (e) et une deuxième sortie de collecteur de struvite (63) pour décharger un effluent aqueux pauvre en struvite (f), ladite sortie de collecteur de struvite (63) étant reliée à l'entrée de nitrification (51).

15. Système selon la revendication 14, dans lequel ledit collecteur de struvite (6) fonctionne dans des conditions atmosphériques.

16. Système selon l'une quelconque des revendications 12-15, dans lequel ledit réacteur de formation de struvite (4) et/ou ledit collecteur de struvite (6) est un réacteur à courant ascendant.

17. Système selon l'une quelconque des revendications 12-16, comprenant en outre un réacteur d'oxydation de H₂S (7) ayant au moins une entrée d'oxydation (71) pour recevoir le ou les effluents gazeux comprenant du H₂S issus de l'unité de digestion anaérobie (3), une première sortie d'oxydation (72) pour décharger un gaz pauvre en H₂S, et une deuxième sortie d'oxydation (73) pour décharger de l'acide sulfurique.

18. Système selon l'une quelconque des revendications 12-17, comprenant en outre une unité de mélange (8) ayant au moins une première entrée de mélange (81) pour recevoir lesdites matières solides de struvite dérivées du réacteur de formation de struvite (4), des moyens de mélange (84) pour dissoudre les matières solides de struvite dans de l'eau, une deuxième entrée de mélange (82) pour recevoir de l'acide sulfurique, et une sortie de mélange (83) pour décharger une composition de fertilisant agricole renouvelable (m), et où la deuxième entrée de mélange (82) est reliée de préférence à la première sortie d'oxydation (72) pour recevoir de l'acide sulfurique dérivé de la production de H₂S dans l'unité de digestion anaérobie (3).
